# EUROPEAN PATENT APPLICATION

(11) **EP 4 440 050 A1**
(43) Date of publication of application: **02.10.2024**
(21) Application number: 22902929.3
(22) Date of filing: 14.09.2022
(51) Int. Cl.: H04L 12/28

(54) **LINK DETECTION METHOD, PUBLIC NETWORK NODE, AND STORAGE MEDIUM**

(30) Priority: 09.12.2021 CN 202111501751
(71) Applicant: ZTE Corporation, Shenzhen, Guangdong 518057 (CN)
(72) Inventor: DU, Fan, Shenzhen, Guangdong 518057 (CN)
(74) Representative: Boult Wade Tennant LLP
(86) International application number: PCT/CN2022/118715
(87) International publication number: WO 2023/103504

(57) **Abstract**

Disclosed are a link detection method, a public network node, and a storage medium. The method comprises: when a current public network node detects the convergence of an internal gateway protocol thereof, inserting a repair path into a package to be forwarded and forcibly forwarding, according to a convergence path, the package into which the repair path is inserted, such that the package into which the repair path is inserted reaches a destination public network node according to the convergence path, and sending a loop detection package having no inserted repair path to the destination public network node according to the convergence path; and when the current public network node receives a feedback package of the loop detection package returned by the destination public network node, forwarding, according to the convergence path, the message to be forwarded having no inserted repair path.

## Description

### CROSS-REFERENCE TO RELATED APPLICATIONS

The present disclosure claims priority to Chinese Patent Application No. 202111501751.8, filed on December 9, 2021, and entitled "Link Detection Method, Public Network Node, and Storage Medium," the entire content of which is incorporated into the present disclosure by reference.

### TECHNICAL FIELD OF THE INVENTION

The present disclosure relates to the technical field of communication, in particular to a link detection method, a public network node, and a storage medium.

### BACKGROUND OF THE INVENTION

In order to solve the problem of micro-loop caused by inconsistent interior gateway protocol (IGP) convergence speeds of public network nodes in a network, the micro-loop prevention technology is proposed. The solution idea is that when a public network node A detects protocol convergence, a micro-loop prevention mechanism will be triggered, and at this moment, the public network node A will insert a segment routing header (SRH) into a packet and force the traffic to travel on the micro-loop prevention path for a fixed time.

### SUMMARY OF THE INVENTION

In a first aspect, the present disclosure provides a link detection method, including: in the case that a current public network node detects interior gateway protocol convergence thereof, inserting a repair path into a packet to be forwarded, and forcibly forwarding a packet into which the repair path is inserted according to a convergency path, such that the packet into which the repair path is inserted reaches a destination public network node according to the convergency path, while sending a loop detection packet into which no repair path is inserted to the destination public network node according to the convergency path; and in the case that the current public network node receives a feedback packet of the loop detection packet returned by the destination public network node, forwarding a to-be-forwarded packet into which no repair path is inserted according to the convergency path.

In a second aspect, the present disclosure provides a public network node, including a communication circuit, a memory and a processor, wherein the communication circuit is configured for communication; the memory is configured to store a computer program; and the processor is configured to execute the computer program and implement the link detection method as described above when executing the computer program.

In a third aspect, the present disclosure provides a computer-readable storage medium storing a computer program which, when executed by a processor, enables the processor to implement the link detection method as described above.

### BRIEF DESCRIPTION OF DRAWINGS

FIG. 1 is a schematic diagram of an application scenario in the related art;
FIG. 2 is a flowchart of an embodiment of a link detection method of the present disclosure;
FIG. 3 is a schematic diagram of a specific application scenario of a link detection method of the present disclosure;
FIG. 4 is a schematic diagram of another specific application scenario of a link detection method of the present disclosure; and
FIG. 5 is a structural schematic diagram of an embodiment of a public network node of the present disclosure.

### DETAILED DESCRIPTION OF THE INVENTION

The technical solutions in the embodiments of the present disclosure will be clearly and completely described therebelow in conjunction with the accompanying drawings in the embodiments of the present disclosure, it is obvious that the described embodiments are only a part of the embodiments of the present disclosure, rather than all of the embodiments. Based on the embodiments in the present disclosure, all other embodiments obtained by those of ordinary skill in the art without inventive labor, fall into the scope of protection of the present disclosure.

The flowcharts shown in the figures are only illustrative and do not necessarily include all of the contents and operations/steps nor are they necessarily performed in the order described. For example, some of the operations/steps may also be broken down, combined or partially combined so that the order of actual execution may vary depending on circumstances.

In the following description, suffixes such as "module", "component" or "unit" used to denote elements are used only to facilitate the description of the present disclosure and have no specific meaning per se. Thus, "module", "component" or "unit" may be used mixedly.

The fixed time in the micro-loop prevention technology is statically configured, causing two problems: the first problem is that before the fixed time runs out, the entire network completes convergency, the micro-loop prevention path would not be canceled, and the traffic will continue to go on the micro-loop prevention path for the fixed time, so that the customer's requirement for the link cannot be met; and the second problem is that when the fixed time runs out, the entire network has not yet completed convergence, the fixed time fails, and the traffic will be switched to the original path, which still causes loops and results in packet loss.

Before describing the embodiments of the present disclosure in detail, the principles of micro-loop prevention technology will be described.

In a network, when the current forwarding path of traffic changes due to the failure of a public network node or the failure recovery of a public network node, other public network nodes receive changed link state information, notify neighbors, and perform routing computation. The public network nodes are inconsistent in the IGP convergence speed. The optimization of routing computation is the focus of IGP convergence speed. Generally, public network nodes with high performance tend to have higher IGP convergence speed, while public network nodes with poor performance tend to have lower IGP convergence speed. Inconsistent IGP convergence speed of public nodes in the network may lead to micro-loop problems.

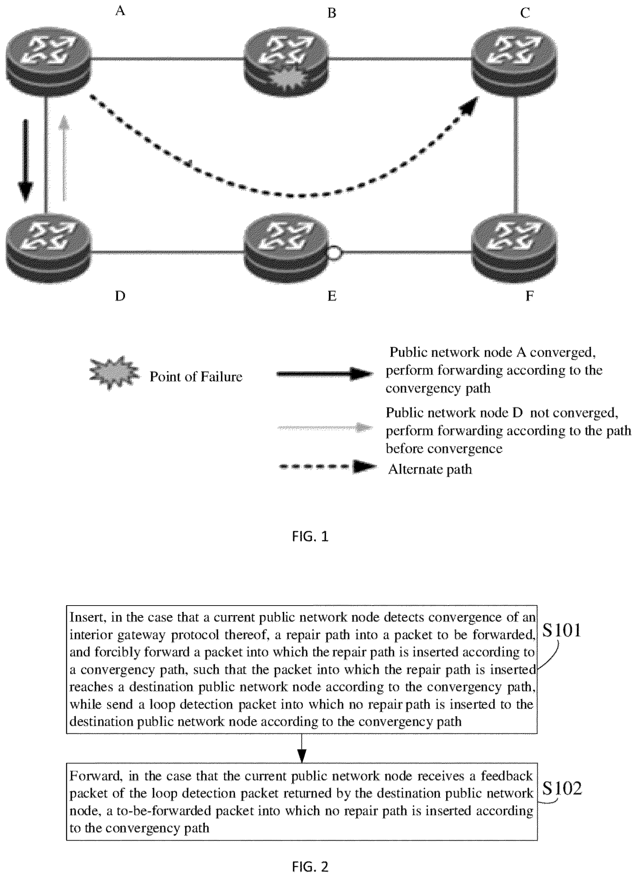

Referring to FIG. 1, in an application scenario, a public network node A, a public network node B and a public network node C form a preferred primary path for packet forwarding, while the public network node A, a public network node D, a public network node E, a public network node F and the public network node C form an alternate path for packet forwarding. When the public network node B fails, the public network node A detects IGP convergence thereof, so the public network node A sends a packet to the public network node D according to the alternate path, but of the public network node D has no IGP convergence temporarily, so the public network node D will select the path (the public network node A, the public network node B and the public network node C) before convergence , and send the packet to the public network node A, the public network node A will send the packet to the public network node D again, and the public network node D will send the packet to the public network node A again. Therefore, a micro-loop is formed between the public network node A and the public network node D.

In another application scenario, the public network node A, the public network node B and the public network node C form a preferred primary path for packet forwarding, while the public network node A, the public network node D, the public network node E, the public network node F and the public network node C form an alternate path for packet forwarding. When the failure of the public network node B is eliminated, the public network node D detects the IGP convergence thereof, and the public network node D sends a packet to the public network node A according to the primary path, but the public network node A has no IGP convergency temporarily, so the public network node A will select the alternate path (the public network node A, the public network node D, the public network node E, the public network node F and the public network node C), and send the packet to the public network node D, the public network node D will send the packet to the public network node A again, and the public network node A will send the packet to the public network node D again. Therefore, a micro-loop is formed between the public network node A and the public network node D.

The solution of micro-loop prevention is that: for the first application scenario, when the public network node A detects the IGP convergence thereof, the micro-loop prevention mechanism will be triggered, at this time, the public network node A will insert an SRH into the packet and force the packet to travel on the micro-loop prevention path (that is, the alternate path) for a fixed time. For the second application scenario, when the public network node D detects the IGP convergence thereof, the micro-loop prevention mechanism will be triggered, at this time, the public network node D will insert an SRH into the packet and force the packet to travel on the micro-loop prevention path (i.e., the primary path) for a fixed time.

The fixed time described above is statically configured, so there are two problems: the first problem is that before the fixed time runs out, the entire network completes convergency, the micro-loop prevention path would not be canceled, and the traffic will continue to go on the micro-loop prevention path for the fixed time. The biggest drawbacks of this problem are: the Segment Routing-Internet Protocol version 6 (SRv6) technology has the advantage of controlling the traffic, the primary path set on the basis of SRv6 is worthy and can meet the customer's needs best, that is, if the convergence of the primary path has been completed, then the traffic should be immediately switched back to the primary path to meet the customer's requirements for the link. The second problem is that when the fixed time runs out, the entire network has not yet completed convergence, the fixed time fails, and the traffic will be switched to the original path, which still causes loops and results in packet loss.

In the embodiment of the present disclosure, since a repair path is inserted into the packet and the packet into which the repair path is inserted is forcibly forwarded according to a convergency path, and at the same time, a loop detection packet into which no repair path is inserted is also sent to a destination public network node according to the convergency path. When there is a loop in the network, the loop detection packet will be forwarded in the loop instead of being forcibly forwarded on the convergency path due to the fact that no repair path is inserted into the loop detection packet, and the destination public network node will not receive the loop detection packet; and only when there is no loop in the network, the loop detection packet will be forwarded on the convergence path to reach the destination public network node. Therefore, when the feedback packet returned by the destination public network node is received, it indicates that there is no loop in the network and the whole network completes convergency, the repair path for the packet can be removed, and the packet can be forwarded on the convergency path. In this way, micro-loop prevention can be deployed dynamically, the packet can be switched to the protocol converged path at the first time, the user's demand can be met to the greatest extent, and micro-loop prevention failure caused by too short delay time set by a static micro-loop delay device will not occur.

Referring to FIG. 2, which is a flowchart of an embodiment of a link detection method of the present disclosure. The method may be applied to a public network node of an SRv6 network, and may also be applied to other versions of public network nodes, and other versions that can use this technology are not limited in the process of technical development.

SRv6 is a new generation of Internet Protocol (IP) bearer protocol, which can simplify and unify conventional complex network protocols, and is the basis for building intelligent IP networks in the era of 5G and cloud. SRv6 combines the advantages of source routing of Segment Routing (SR) with the simplicity and extensibility of Internet Protocol version 6 (IPv6), and has multiple programming space, which is in line with the idea of Software Defined Network (SDN), and is a powerful tool for realizing intent-driven networks. SRv6 can better meet the demands of new network services due to its rich network programming capability, and also makes network service deployment easier due to its IPv6-compatible nature. SRv6 can not only break the boundary of the cloud and the network, prevent the operator network from being pipelined, extend the network to the user terminal, and share more dividends of the information age, but also help the operator to rapidly develop an intelligent cloud network, implement service level agreement (SLA) safeguards at the application level, and make thousands of businesses benefit.

The method of embodiments of the present disclosure may be applied to two work modes of SRv6: SRv6 Traffic Engineering Policy (TE Policy) and SRv6 BE (Best Effort), and other versions that can use this technology are not limited in the process of technical development.

The public network is relative to the private network. The private network can refer to the network built by enterprises or family users, and the public network can refer to the network built by operators, and is primarily responsible for connecting networks of various enterprises or families. The public network nodes mainly include routers. A public network node may be any node on the public network, including edge public network nodes (head public network nodes for a path) and also intermediate public network nodes. The method of this embodiment may be deployed at any node of the public network, or may be deployed at some nodes of the public network, or may be deployed at all nodes of the public network.

The method includes steps S101 and S102.

At Step S101: in the case that a current public network node detects interior gateway protocol convergence thereof, a repair path is inserted into a packet to be forwarded, and a packet into which the repair path is inserted is forcibly forwarded according to a convergency path, such that the packet into which the repair path is inserted reaches a destination public network node according to the convergency path, and at the same time, a loop detection packet into which no repair path is inserted is sent to the destination public network node according to the convergency path.

At Step S102: in the case that the current public network node receives a feedback packet of the loop detection packet returned by the destination public network node, a to-be-forwarded packet into which no repair path is inserted is forwarded according to the convergency path.

In this embodiment, the current public network node may be a head public network node or an intermediate public network node. The head public network node may refer to the node where the packet to be forwarded flows into the public network (head public network node). The destination public network node may be the destination node that the packet needs to reach, wherein the destination public network node may be a tail public network node, and the tail public network node may refer to the node where the packet to be forwarded flows out of the public network (tail public network node).

The packet to be forwarded may be a data packet of a user, or may include a first Seamless Bidirectional Forwarding Detection (SBFD) packet configured to detect a link state for data forwarding in addition to the data packet of a user.

SBFD is a simplified mechanism for Bidirectional Forwarding Detection (BFD), which simplifies the state machine of BFD, shortens the negotiation time of BFD session, and increases the flexibility of detection for the node path of the entire network. The session state of an SBFD initiator can only include Up and Down states, and a sent packets is only in the Up or Down state. A reflector does not proactively send SBFD packets, and only verifies the parameters of SBFD packets to construct a loopback SBFD packet. The state of the returned packets can only be Up or AdminDown state. If the reflector is not in the working state, the packet state is set as AdminDown. SBFD and BFD are distinguished by the User Datagram Protocol (UDP) port number. SBFD is mainly characterized by unidirectional detection. In this embodiment, the first seamless bidirectional forwarding detection packet is mainly used to detect the link state for data forwarding, so as to determine whether the packet is successfully forwarded according to a predetermined path.

IGP is a protocol for exchanging routing information between gateways (hosts and routers) within an autonomous network. The Internet may be divided into multiple domains or multiple autonomous systems. A domain may be a group of hosts and a set of routers using the same routing protocol, and managed by a single agency. The interior gateway protocol selects routes in one domain.

That the current public network node detects interior gateway protocol convergence thereof may refer to that the current public network node detects interior gateway protocol convergence of a forwarding path on which the interior gateway protocol needs to forward a packet. When the current public network node detects interior gateway protocol convergence thereof, it indicates that the forwarding path of the packet to be forwarded has changed, and the current node has calculated the interior gateway protocol converged path thereof (i.e., the convergency path). Since the current public network node and the neighboring public network node may be different in the convergency speed, a micro-loop may occur between the two public network nodes, and if the current public network node directly forwards the packet according to the convergency path, the packet may be forwarded in the micro-loop and cannot reach the destination public network node. In order to prevent the packet from being forwarded in the micro-loop, it is necessary to force the packet to be forwarded from the convergency path and reach the destination public network node, so that a repair path is inserted into the packet to be forwarded, the repair path enables the packet into which the repair path is inserted to be forcibly forwarded according to the convergency path and reach the destination public network node.

The loop detection packet is used to detect whether there is a loop between the current public network node and a neighboring public network node. No repair path is inserted into the loop detection packet, so that if there is a loop, although the loop detection packet is sent to the destination public network node according to the convergency path, the loop detection packet is only forwarded in the micro-loop and is not forwarded to the destination public network node along the convergency path. The loop detection packet is not forwarded to the destination public network node along the convergency path until the loop disappears. Upon receipt of the loop detection packet, the destination public network node returns a feedback packet, the current public network node learns that the loop has disappeared from the feedback packet, thus the packet to be forwarded into which no repair path can be forwarded according to the convergency path.

In the embodiment of the present disclosure, the repair path is inserted into the packet and the packet into which the repair path is inserted is forcibly forwarded according to the convergency path, and at the same time the loop detection packet into which no repair path is inserted is sent to the destination public network node according to the convergency path , therefore when there is a loop in the network, the loop detection packet is forwarded in the loop instead of being forcibly forwarded on the convergency path due to the fact that no repair path is inserted into the loop detection packet, and the destination public network node does not receive the loop detection packet; and only when there is no loop in the network, the loop detection packet is forwarded on the convergency path to reach the destination public network node. Therefore, when the feedback packet returned by the destination public network node is received, it indicates that there is no loop in the network and the whole network has converged, and the repair path for the packet can be removed, and the packet can be forwarded on the convergency path. In this way, micro-loop prevention can be deployed dynamically, the packet can be switched to the protocol converged path of at the first time, the user's demand can be met to the greatest extent, and micro-loop prevention failure caused by too short delay time set by a static micro-loop delay device will not occur.

In an embodiment, step S101, i.e., in the case that a current public network node detects interior gateway protocol convergence thereof, a repair path is inserted into a packet to be forwarded, and a packet into which the repair path is inserted is forcibly forwarded according to a convergency path, such that the packet into which the repair path is inserted reaches a destination public network node according to the convergency path, and at the same time, a loop detection packet into which no repair path is inserted is sent to the destination public network node according to the convergency path, may include two more common situations:

One situation is: when a public network node of the primary path fails, and the current public network node detects interior gateway protocol convergence thereof, the repair path is inserted into the packet to be forwarded, and the packet into which the repair path is inserted is forcibly forwarded according to a converged alternate path, such that the packet into which the repair path is inserted reaches the destination public network node according to the converged alternate path, and at the same time, a loop detection packet is sent to the destination public network node according to the alternate path.

Since the packet into which the repair path is inserted can be forced to reach the destination public network node according to the converged alternate path when the public network node of the primary path fails, the packet is switched to the protocol converged alternate path at the first time, thus satisfying the user requirements to the greatest extent.

The other situation is: when failure of a public network node of a primary path is eliminated, and the current public network node detects interior gateway protocol convergence thereof, the repair path is inserted into the packet to be forwarded, and the packet into which the repair path is inserted is forcibly forwarded according to a converged primary path, such that the packet into which the repair path is inserted reaches the destination public network node according to the primary path, and at the same time, the loop detection packet is sent to the destination public network node according to the primary path.

Since the packet into which the repair path is inserted can be forced to reach the destination public network node according to the converged primary path when the failure of the public network node of the primary path is eliminated, the packet is switched to the protocol converged primary path at the first time, thus satisfying the user requirements to the greatest extent.

In an embodiment, after the packet into which the repair path is inserted is forwarded from the current public network node to an adjacent first public network node, the repair path forces the packet to be forwarded from the first public network node to an adjacent second public network node. Since a micro-loop is typically generated between the current public network node and the adjacent first public network node, when the packet is forwarded from the current public network node to the first public network node, the first public network node will forward the packet back to the current public network node due to the presence of the micro-loop, so long as the first public network node is forced to forward the packet to a second neighboring public network node according to a convergency path, the forwarding of the packet in the micro-loop can be broken.

In an embodiment, the repair path forces the packet into which the repair path is inserted to be forwarded via a specified outgoing interface of the first public network node, so as to reach the second public network node. An SRH may be inserted into the packet, and is incorporated into the repair path End.X.

SRH has two pieces of key information, the first is the Segment List in the form of an IPv6 address, and the other key field is the Segment Left (SL), which indicates the currently active Segment List. The Segment List in the form of the IPv6 address, commonly referred to as an IPv6 Segment, may also be referred to simply as IPv6 SID. The IPv6 address of Segment List is different from conventional IPv6 addresses in form. In SRv6, the IPv6 address consists of three parts, firstly a Locator part, secondly a Function part, and finally an Argument part, which together form a 128-bit IPv6 address, wherein the Argument part is optional and may not be present. The locator part has a routing function. The Function part is an instruction that identifies binding to the native. The type of SID varies with types of instructions, and different types of SID have different functions. End.X SID represents an adjacency in the network, and instruction thereof to a device is to process the SRH, update the IPv6 destination address field, and then forward the packet via the outgoing interface specified by End.X SID.

In one embodiment, the method further includes: a micro-loop prevention timer is started when the current public network node detects interior gateway protocol convergence thereof; and the micro-loop prevention timer is released when the current public network node receives the feedback packet of the loop detection packet returned by the destination public network node. The micro-loop prevention timer helps to determine when the micro-loop exists, and when a feedback packet is received, it indicates that the micro-loop disappears, thus releasing the micro-loop prevention timer resource.

In an embodiment, the loop detection packet includes a second seamless bidirectional forwarding detection packet, wherein the second seamless bidirectional forwarding detection packet is different from the first seamless bidirectional forwarding detection packet configured to detect the link state for data forwarding.

In an embodiment, the User Data Protocol (UDP) source port number of the second seamless bidirectional forwarding detection packet is different from the UDP source port number of the first seamless bidirectional forwarding detection packet.

Of course, in order to distinguish the second seamless bidirectional forwarding detection packet from the first seamless bidirectional forwarding detection packet, other fields of the header of the seamless bidirectional forwarding detection packets may be used to represent the difference.

It should be noted that the second SBFD is in a slow packet sending state in the down state, so that there will not be a large number of packets, and even if a loop is formed in the link, the link will not be blocked by the packets.

The method of embodiments of the present disclosure will be specifically described below.

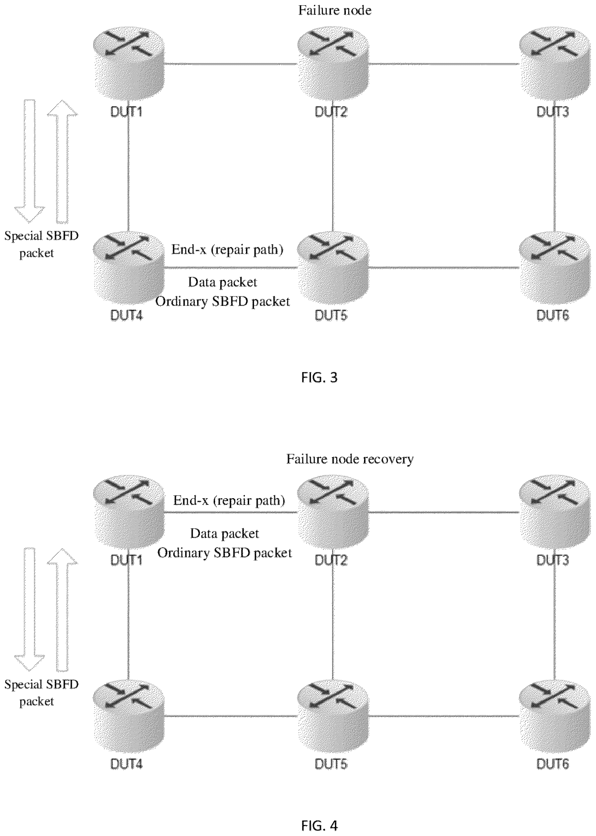

Referring to FIGS. 3 and 4, there are three types of packets in the network: a data packet, an ordinary SBFD packet (i.e., the first SBFD packet), and a special SBFD packet (i.e., the second SBFD packet for loop detection), and the overall flow of failure and failure recovery of a public network node DUT2 will now be described in detail.

Referring to FIG. 3, the overall flow of the failure of the public network node DUT2 is shown.
(1) The data packet, the ordinary SBFD packet, and the special SBFD packet are forwarded via the primary path of DUT1-DUT2-DUT3.
(2) When a link between DUT1 and DUT2 fails, DUT1 forwards the three types of packets on a Topology-Independent Loop-free Alternate (TI-LFA) path, i.e., DUT1-DUT4-DUT5-DUT2-DUT3. A repair path (i.e., end-x of DUT4-DUT5) is inserted into the data packet and the ordinary SBFD packet, and the SBFD packet with the special original UDP port number is not affected by the micro-loop prevention mechanism, thus a loop is formed between DUT1 and DUT4, and the special SBFD process is down.
(3) When protocol convergence is completed and the loop disappears, the special SBFD packet can be normally forwarded to DUT3, resulting in the special SBFD process being up, and triggering DUT1 to release the micro-loop prevention timer.
(4) DUT1 releases the micro-loop prevention timer, and the data packet and the ordinary SBFD packet are forwarded according to the converged alternate path.

Referring to FIG. 4, the overall flow of failure recovery of the public network node DUT2 is shown.
(1) The data packet, the ordinary SBFD packet, and the special SBFD packet are forwarded via the alternate path of DUT1-DUT4-DUT5-DUT2-DUT3.
(2) The link between DUT1 and DUT2 is restored, and DUT4 forwards the three types of packets according to the primary path, i.e., via DUT1-DUT2-DUT3. A repair path (i.e., end-x of DUT1-DUT2) is inserted into the data packet and the ordinary SBFD packet, and the SBFD packet with the special original UDP port number is not affected by the micro-loop prevention mechanism, thus a loop is formed between DUT1 and DUT4, and the special SBFD process is down.
(3) When the protocol convergence is completed and the loop disappears, the special SBFD can be normally forwarded to DUT3, resulting in the special SBFD process being up, and triggering DUT4 to release the micro-loop prevention timer.
(4) DUT4 releases the micro-loop prevention timer, and the data packet and the ordinary SBFD packet are forwarded according to the converged primary path.

In this way, micro-loop prevention can be deployed dynamically, the packet can be switched to the protocol converged path at the first time, the user's demand can be met to the greatest extent, and micro-loop prevention failure caused by too short delay time set by a static micro-loop delay device will not occur.

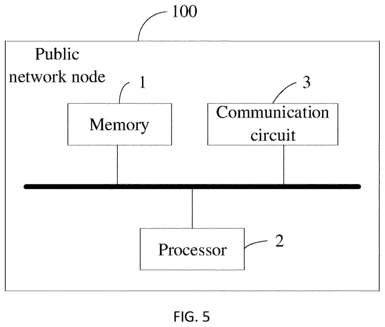

Referring to FIG. 5, which is a structural schematic diagram of an embodiment of a public network node of the present disclosure. It needs to be explained that the public network node of this embodiment can implement the link detection method described above, and the detailed description of the relevant contents is referred to the above method section, which will not be repeated here.

The public network node 100 includes a communication circuit 3, a memory 1 and a processor 2, wherein the communication circuit 3 and the memory 1 are connected to the processor 2 via a bus. The communication circuit 3 is configured for communication; the memory 1 is configured to store a computer program; the processor 2 is configured to execute the computer program and implement the link detection method as described in any of the above when executing the computer program.

The processor 2 may be a micro control unit, a central processing unit or a digital signal processor, etc. The memory 1 may be a Flash chip, a read-only memory, a magnetic disk, an optical disk, a USB flash disk, or a removable hard disk, etc.

The present disclosure also provides a computer-readable storage medium storing a computer program which, when executed by a processor, enables the processor to implement the link detection method as described in any of the above.

The computer-readable storage medium may be an internal storage unit of the above public network node, such as a hard disk or a memory. The computer-readable storage medium may also be an external storage device of the above public network node, such as an equipped plug-in hard disk, intelligent memory card, secure digital card, flash memory card, or the like.

Those of ordinary skill in the art will appreciate that all or some of the steps in the methods, systems, functional modules/units in the devices disclosed above may be implemented as software, firmware, hardware, and appropriate combinations thereof.

In a hardware implementation, the division between the functional modules/units referred to in the above description does not necessarily correspond to the division of physical components; for example, one physical component may have multiple functions, or one function or step may be performed by several physical components in cooperation. Some or all of the physical components may be implemented as software executed by a processor, such as a central processing unit, digital signal processor or microprocessor, or as hardware, or as an integrated circuit, such as an application specific integrated circuit. Such software may be distributed on a computer-readable medium, which may include a computer storage medium (or non-transitory medium) and a communication medium (or transitory medium). As is well known to a person of ordinary skill in the art, the term computer storage medium includes volatile and nonvolatile, removable and non-removable medium implemented in any method or technology for storage of information such as computer-readable instructions, data structures, program modules or other data. The computer storage medium includes, but is not limited to, RAM, ROM, EEPROM, flash memory or other memory technology, CD-ROM, digital versatile disks (DVD) or other optical disk storage, magnetic cassettes, magnetic tape, magnetic disk storage or other magnetic storage devices, or any other medium which can be used to store the desired information and which can accessed by a computer. Further, it is well known to those of ordinary skill in the art that communication medium typically embodies computer-readable instructions, data structures, program modules, or other data in a modulated data signal such as a carrier wave or other transport mechanism and may include any information delivery media.

Alternative embodiments of the present disclosure are described above with reference to the accompanying drawings, without thereby limiting the scope of rights of the present disclosure. Any modifications, equivalent replacements and improvements made by those skilled in the art without departing from the scope and spirit of the present disclosure should be within the scope of the rights of the present disclosure.

## Claims

1. A link detection method, comprising:
inserting, in the case that a current public network node detects interior gateway protocol convergence thereof, a repair path into a packet to be forwarded, and forcibly forwarding a packet into which the repair path is inserted according to a convergency path, such that the packet into which the repair path is inserted reaches a destination public network node according to the convergency path, while sending a loop detection packet into which no repair path is inserted to the destination public network node according to the convergency path; and
forwarding, in the case that the current public network node receives a feedback packet of the loop detection packet returned by the destination public network node, a to-be-forwarded packet into which no repair path is inserted according to the convergency path.

2. The method according to claim 1, wherein the repair path forces, after the packet into which the repair path is inserted is forwarded from the current public network node to an adjacent first public network node, the packet into which the repair path is inserted to be forwarded from the first public network node to an adjacent second public network node.

3. The method according to claim 2, wherein the repair path forces the packet into which the repair path is inserted to be forwarded via a specified outgoing interface of the first public network node, so as to reach the second public network node.

4. The method according to claim 1, wherein the packet to be forwarded comprises a data packet, and a first seamless bidirectional forwarding detection packet configured to detect a link state for data forwarding.

5. The method according to claim 1, wherein inserting, in the case that the current public network node detects interior gateway protocol convergence thereof, the repair path into the packet to be forwarded, and forcibly forwarding the packet into which the repair path is inserted according to the convergency path, such that the packet into which the repair path is inserted reaches the destination public network node according to the convergency path, while sending the loop detection packet into which no repair path is inserted to the destination public network node according to the convergency path, comprises:
upon the condition that a public network node of a primary path fails, inserting, in the case that the current public network node detects interior gateway protocol convergence thereof, the repair path into the packet to be forwarded, and forcibly forwarding the packet into which the repair path is inserted according to a converged alternate path, such that the packet into which the repair path is inserted reaches the destination public network node according to the alternate path, while sending the loop detection packet into which no repair path is inserted to the destination public network node according to the alternate path; or
upon the condition that failure of a public network node of a primary path is eliminated, inserting, in the case that the current public network node detects interior gateway protocol convergence thereof, the repair path into the packet to be forwarded, and forcibly forwarding the packet into which the repair path is inserted according to a converged primary path, such that the packet into which the repair path is inserted reaches the destination public network node according to the primary path, while sending the loop detection packet into which no repair path is inserted to the destination public network node according to the primary path.

6. The method according to claim 1, further comprising:
starting, in the case that the current public network node detects interior gateway protocol convergence thereof, a micro-loop prevention timer; and
releasing, in the case that the current public network node receives the feedback packet of the loop detection packet returned by the destination public network node, the micro-loop prevention timer.

7. The method according to claim 1, wherein the loop detection packet comprises a second seamless bidirectional forwarding detection packet, and the second seamless bidirectional forwarding detection packet is different from a first seamless bidirectional forwarding detection packet configured to detect the link state for data forwarding.

8. The method according to claim 7, wherein a user data protocol called UDP source port number of the second seamless bidirectional forwarding detection packet is different from a UDP source port number of the first seamless bidirectional forwarding detection packet.

9. A public network node, comprising a communication circuit, a memory, and a processor, wherein the communication circuit is configured for communication; the memory is configured to store a computer program; and the processor is configured to execute the computer program and implement the link detection method according to any one of claims 1-8 when executing the computer program.

10. A computer-readable storage medium storing a computer program which, when executed by a processor, enables the processor to implement the link detection method according to any one of claims 1-8.
